# EUROPÄISCHE PATENTANMELDUNG

(11) **EP 1 161 000 A2**
(43) Veröffentlichungstag der Anmeldung: **05.12.2001**
(21) Anmeldenummer: 01109219.4
(22) Anmeldetag: 14.04.2001
(51) Int. Cl.: H04B 7/08, H04L 27/26

(54) **Verfahren und Diversity-Empfangsvorrichtung zum Empfangen eines Mehrträger-Signals**

(30) Priorität: 27.05.2000 DE 10026538
(71) Anmelder: Deutsche Telekom AG, 53113 Bonn (DE)
(72) Erfinder: Caspard, Ingo, 64372 Ober-Ramstadt (DE); Winter, Jürgen, 63512 Hainburg (DE)

(57) **Zusammenfassung**

Die Erfindung betrifft ein Verfahren zum Empfangen eines Mehrträgersignals, insbesondere eines OFDM (Orthogonal Frequency Divisional Multiplexing)-Signals, und eine zum Empfangen eines solchen Mehrträgersignals ausgebildeten Diversity-Empfangsvorrichtung, die vorzugsweise in einem DVB-T-System zum Einsatz kommen können.

Zur Verbesserung der Empfangsqualität von Signalen, die über einen Funkkanal übertragen werden, kommen seit langem Diversityempfänger zum Einsatz, die zur Kombination der empfangenen Diversitysignale eine Selection-Combining oder eine Maximum-Ratio-Combining-Methode anwenden. Solche Empfänger sind jedoch komplex im Aufbau.

Die Erfindung lehrt daher eine weniger komplexe und somit kostengünstigere Diversity-Empfangsvorrichtung. Diese umfasst einen ersten Diversityzweig (40), der eine erste Empfangsantenne (42) zum Empfangen eines Mehrträger-Signals aufweist, wenigstens einen zweiten Diversityzweig (50), der eine zweite Empfangsantenne (52) zum Empfangen des Mehrträgersignals und eine Verzögerungseinrichtung (54; 54') aufweist, einen eingangsseitig mit den Diversityzweigen verbundenen Addierer (60; 60') zum Bilden eines Mehrträger-Summensignals, und einen ausgangsseitig mit dem Addierer (60) verbundenen Empfänger (70; 70') zur Verarbeitung des Mehrträger-Summensignals.

## Beschreibung

Die Erfindung betrifft ein Verfahren zum Empfangen eines Mehrträgersignals, insbesondere eines OFDM (Orthogonal Frequency Divisional Multiplexing)-Signals, über einen Übertragungskanal sowie eine zum Empfangen eines solchen Mehrträgersignals ausgebildete Diversity-Empfangsvorrichtung, die vorzugsweise in einem DVB-T-System zum Einsatz kommen können.

Zur Verbesserung der Empfangsqualität von Signalen, die über einen Funkkanal übertragen werden, kommen seit langem Diversity-Verfahren zur Anwendung. Solche Diversity-Verfahren sind beispielsweise von Schwartz, M.; Bennet, W.R.; Stein, S.in "Communication Systems and Techniques", McGRAW-HILL, New York, 1966 und von Jakes, W.C. in "Microwave Mobile Communications", John Wiley&Sons, New York, 1974 beschrieben.

Insbesondere bei der Nachrichtenübertragung über einen zeitvarianten Funkkanal wird versucht, die Übertragungsqualität zu verbessern, indem die von einem Sender zu einem Empfänger zu übertragende Nachricht über verschiedene Wege ("Diversity-Zweige") übertragen wird. Die hierzu angewandten Diversity-Verfahren werden nach der Art der Diversität ("Diversity"), d.h. nach der Art, mit der die Nachricht mehrfach übertragen wird, unterschieden. So gibt es Verfahren, die Nachrichten beispielsweise im Raumdiversity, Frequenzdiversity, Winkeldiversity, Polarisationsdiversity, Zeitdiversity oder Mehrwegediversity übertragen. Solche Verfahren sind u. a. in "Communication Systems and Techniques", McGRAW-HILL, New York, 1966 von Schwartz, M.; Bennet, W.R.; Stein, S. beschrieben. Empfangsseitig werden die über die verschiedenen Diversity-Zweige empfangenen Signale kombiniert und entsprechend verarbeitet. Zur empfangsseitigen Kombination der empfangenen Signale der verschiedenen Diversity-Zweige werden insbesondere drei Verfahren angewendet, nämlich "Maximal-Ratio-Combining", "Equal-Gain-Combining" und "Selection-Combining", die beispielsweise in "Communication Systems and Techniques", McGRAW-HILL, New York, 1966 von Schwartz, M.; Bennet, W.R.; Stein, S. beschrieben sind.

Beim digitalen terrestrischen Fernsehstandard DVB-T, der in ETSI (European Telecommunications Standards Institute): Digital Video Broadcasting (DVB); Framing structure, channel coding and modulation for digital Terrestrial television (DVB-T), ETS 300 744, 1997 definiert ist, lassen sich insbesondere zur Verbesserung des Mobilempfangs verschiedene Diversityverfahren erfolgreich einsetzen. So berichten beispielsweise Launay, E.; Rinne, J; Hammerschmidt, J.; Hutter, A.; Kussmann, H. in "Report on antenna diversity techniques at the receiver side for mobile and portable DVB-T services. ACTS-Projekt MOTIVATE (Mobile Television and Innovative Receivers)" der Europäischen Gemeinschaft; Dokument WP3B/CCETT/13/V4, 1999 und Launay, E.; Hammerschmidt, J.; Rinne, J. in "Antenna diversity techniques for mobile and portable DVB-T receivers." Tagungsband zur IBC (International Broadcasting Convention) 1999, Amsterdam, 1999 über den Einsatz von Raumdiversity mit Maximal-Ratio-Combining bzw. mit Selection-Combining zum Mobilempfang von DVB-T-Signalen.

Das Raumdiversityverfahren wird durch mindestens zwei Empfangsantennen realisiert, die in einem bestimmten räumlichen Abstand, der vorzugsweise in der Größenordnung einer Wellenlänge der Trägerfrequenz liegt, aber auch größer sein kann, angeordnet sind. Jede Empfangsantenne ist hierbei einem Diversity-Zweig zugeordnet ist. Durch den gewählten Antennenabstand wird eine ausreichende Dekorrelation der Diversity-Zweige gewährleistet.

Beim Selection-Combining-Verfahren, das im Vergleich zum Maximal-Ratio-Combining-Verfahren in der schaltungstechnischen Realisierung weniger aufwendig ist, wird der Diversityzweig, der zum Abtastzeitpunkt die höchste Empfangsleistung aufweist, an den Demodulator und Decoder durchgeschaltet.

Für das DVB-T-System, bei dem ein OFDM-Mehrträgerverfahren verwendet wird, bedeutet dies, dass jeweils der Unterträger mit der größten Signalleistung ausgewählt wird und den weiteren Demodulator-/Decoderstufen zugeführt wird.

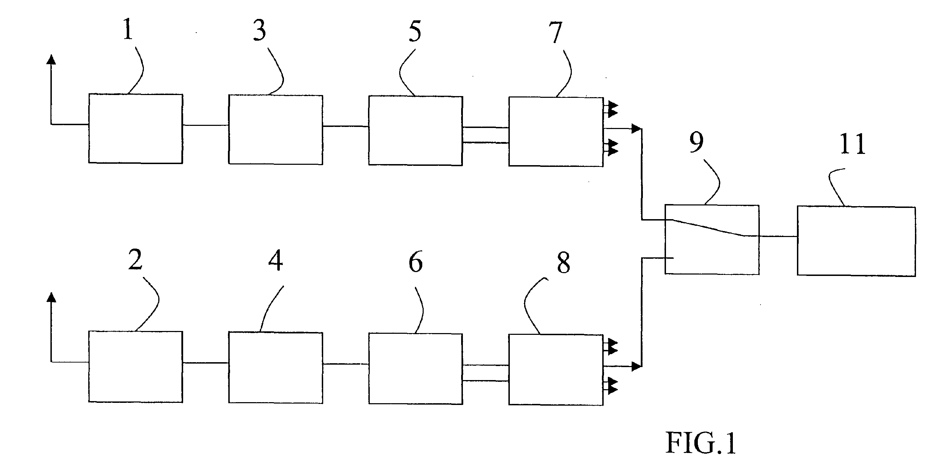

Zunächst wird das Selection-Combining-Verfahren anhand der Fig.1 näher erläutert.

Das DVB-T-Signal wird an zwei räumlich getrennten Antennen 1 und 2 empfangen, die Bestandteil eines ersten und zweiten Diversityzweiges sind. Beide Eingangssignale werden dann jeweils einem Hochfrequenzeingangsteil 3 bzw. 4, einem Analog-Digital-Wandlern 5 bzw. 6 und einem FFT-Prozessor 7 bzw. 8 zugeführt. Die Ausgangssignale der FFT-Prozessoren 7 und 8 bestehen jeweils aus 1705 nutzbaren Unterträgern (im 2K Modus) oder 6817 nutzbaren Unterträgern (im 8K Modus). Die Empfangsleistung jedes Unterträgers jedes Diversityzweiges wird gemessen, wobei die gemessene Empfangsleistung jedes Unterträgers des ersten Diversityzweiges mit der Empfangsleistung des entsprechenden Unterträgers des zweiten Diversityzweiges in einer Einrichtung 9 verglichen wird. Derjenige Untertäger, der die größere Empfangsleistung aufweist, wird einem Demodulator und Decoder 11 zugeführt.

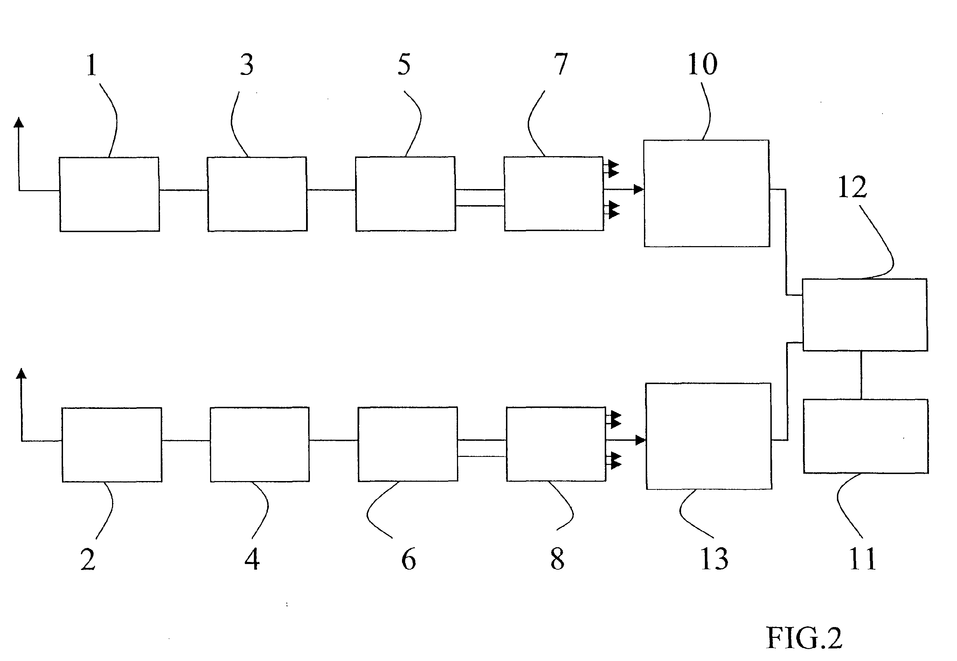

Die Wirkungsweise des aufwendigeren Maximal-Ratio-Combining-Verfahrens wird im Folgenden anhand von Fig. 2 erläutert.

Im Unterschied zu der in Fig. 1 dargestellten Anordnung werden die Ausgangssignale der FFT-Prozessoren 7 und 8 jedes Diversityzweiges einer Kanalschätzeinrichtung 12 bzw. 13 zugeführt. Bei dem hier betrachteten DVB-T-System wird diese Kanalschätzung durch Interpolation in Zeit- und Frequenzrichtung zwischen im Empfänger anhand von bekannten Pilotsymbolen ermittelten Abtastwerten des Kanals durchgeführt. Unter Verwendung dieser Kanalschätzungen werden dann die einzelnen Unterträger jedes Diversity-Zweiges in einer Gewichtungs- und Additionseinrichtung 10 mit einer Gewichtung versehen und addiert. Das gewichtete Summensignal wird danach einem Demodulator und Decoder 11 zugeführt.

Wie aus den Fig. 1 und 2 ersichtlich ist, enthält jeder Diversityzweig ein Hochfrequenzeingangsteil (Tuner) zur Erzeugung der äquivalenten Basisbandsignale, einen Analog-Digital-Wandler und einen FFT-Prozessoren (FFT: Fast Fourier Transformation). Darüber hinaus ist bei der Anordnung nach Fig. 1 die Einrichtung 9 erforderlich, die eine Schaltung zur Messung der Nutzleistung für jeden Unterträger sowie einen geeigneten Multiplexer zur Umschaltung des Ausgangs auf den jeweils leistungsstärksten Unterträger aufweist. Bei der Anordnung nach Fig. 2 hingegen ist eine eigene Kanalschätzung für jeden Diversityzweig auszuführen. Ferner ist ein Schaltungsteil vorzusehen, der die Addition der gewichteten Einzelsignale der Diversityzweige vornimmt.

Der Erfindung liegt daher die Aufgabe zugrunde, ein Verfahren und eine Diversity-Empfangsvorrichtung verfügbar zu machen, die zu einem geringeren und daher kostengünstigeren schaltungstechnischen Aufwand gegenüber den bekannten Anordnungen führt.

Der Kerngedanke der Erfindung ist darin zu sehen, den schaltungstechnischen Aufwand dadurch zu reduzieren, dass die Anzahl aufwendiger und komplexer Schaltungskomponenten in jedem Diversityzweig einer Empfängervorrichtung reduziert wird. Dies wird vornehmlich dadurch erreicht, dass die einzelnen Empfangssignale der Diversityzweige in ein Mehrwegesignal umgesetzt werden, welches dann in einem Empfänger verarbeitet wird.

Dieses Problem löst die Erfindung zum einen durch die Verfahrensschritte des Anspruchs 1.

Danach wird zunächst ein Mehrträger-Signal an einer ersten und wenigstens einer zweiten Empfangsantenne empfangen. Das an der zweiten Empfangsantenne empfangene Mehrträger-Signals wird um eine vorbestimmbare Zeitdauer verzögert und zum an der ersten Empfangsantenne empfangenen Mehrträger-Signal zur Bildung eines Mehrträger-Summensignals addiert. Das Mehrträger-Summensignal entspricht somit einem Mehrwegesignal. Das Mehrträger-Summensignals wird nunmehr einem Empfänger zur Weiterverarbeitung des Mehrträger-Summensignals zugeführt.

Vorteilhafte Weiterbildungen sind Gegenstand der Unteransprüche.

Das Mehrträger-Summensignal wird zunächst einer Analog-Digital-Umsetzung und einer FFT-Transformation unterworfen, wobei für den Übertragungskanal entsprechend der Bandbreite des Mehrträger-Summensignals die Kanalimpulsantwort geschätzt wird. Anschließend wird jeder Unterträger demoduliert, decodiert und/oder einem Deinterleaver zugeführt. Dies hängt jedoch von dem verwendeten Sender ab. Durch die Umsetzung der einzelnen Empfangssignale in ein entsprechendes Mehrwegesignal, welches anschließend verarbeitet wird, kann der schaltungstechnische Aufwand in jedem Diversityzweig deutlich reduziert werden.
Um das Verfahren hinsichtlich der zeitlichen Trennung der Impulsantwort der Diversityzweige verbessern zu können, kann die Dauer der Kanalimpulsantwort geschätzt und in Abhängigkeit von der geschätzen Dauer die Verzögerungszeit eingestellt werden.

Alternativ oder zusätzlich kann nach der Decodierung des Mehrträger-Summensignals die Bitfehlerrate ermittelt und in Abhängigkeit davon die Verzögerungszeit derart adaptiv eingestellt wird, dass die Bitfehlerrate minimiert wird.

Das technische Problem wird ebenfalls durch die Merkmale des Anspruchs 5 gelöst.

Dazu umfasst die Diversity-Empfangsvorrichtung einen ersten Diversityzweig, der eine erste Empfangsantenne zum Empfangen eines Mehrträger-Signals aufweist, wenigstens einen zweiten Diversityzweig, der eine zweite Empfangsantenne zum Empfangen des Mehrträgersignals und eine Verzögerungseinrichtung aufweist, einen eingangsseitig mit den Diversityzweigen verbundenen Addierer zum Bilden eines Mehrträger-Summensignals, und einen ausgangsseitig mit dem Addierer verbundenen Empfänger zur Verarbeitung des Mehrträger-Summensignals. Da die Zusammensetzung der Empfangssignale in den Diversityzweigen zu einem Mehrträger-Summensignal vor der eigentlichen Verarbeitung erfolgt, kann als Empfänger ein konventioneller Empfänger verwendet werden, der üblicherweise nicht für einen Diversity-Empfang ausgelegt ist.

Vorteilhafte Weiterbildungen sind Gegenstand der Unteransprüche.

Ein geeigneter konventioneller Empfänger weist ein Hochfrequenz-Eingangsteil, auch Tuner genannt, einen Analog-Digitalwandler, einen FFT-Prozessor, eine Demodulations-, Decodiereinrichtung und/oder in der Regel einen Deinterleaver auf.

Soll der Empfänger in einem DVB-T-System (Digital Video Broadcasting-Terrestrical) eingesetzt werden, ist dem FFT-Prozessor eine Kanalschätzeinrichtung zum Schätzen der Kanalimpulsantwort nachgeschaltet.

Damit das empfangene Mehrträger-Signal bereits in den Diversity-Zweigen digital verarbeitet werden kann, weist der erste und zweite Diversityzweig neben der Empfangsantenne jeweils ein Hochfrequenz-Eingangsteil und einen Analog-Digitalwandler auf. In diesem Fall sind dann die Verzögerungseinrichtung im zweiten Diversityzweig und der Addierer zum Verarbeiten digitaler Eingangssignale ausgebildet. Der Empfänger enthält dann nur einen FFT-Prozessor, eine Demodulator-, Decodiereinrichtung und/oder einen Deinterleaver.

Für den Fall, dass die Diversity-Empfangsvorrichtung wieder in einem DVB-T-System eingesetzt werden soll, ist dem FFT-Prozessor eine Kanalschätzeinrichtung nachgeschaltet.

Um die Qualität der Detektierbarkeit der im Mehrträger-Summensignal enthaltenen Unterträger zu erhöhen, sollte die in das Mehrträgersignal im zweiten Diversityzweig eingeführte Verzögerung größer als die Abtastdauer der Analo-Digitalwandler und kleiner als die Guardintervalldauer des Mehrträgersignals sein.

Eine optimale Verzögerungszeit kann adaptiv eingestellt werden. Hierzu erzeugt ein Stellelement in Abhängigkeit von der im Empfänger ermittelten Bitfehlerrate und/oder von der geschätzten Dauer der Kanalimpulsantwort eine entsprechende Stellgröße für die Verzögerungseinrichtung.

Die Erfindung wird nachstehend anhand der Ausführungsbeispiele in Verbindung mit den beiliegenden Zeichnungen näher erläutert. Gleiche oder ähnliche Komponenten sind darin mit gleichen Bezugszeichen versehen.
Es zeigen:
- Fig. 1: eine bekannte Empfängeranordnung mit Raumdiversity und Selection-Combining für ein DVB-T-Signal,
- Fig. 2: eine bekannte Empfängeranordnung mit Raumdiversity und Maximal-Ratio-Combining für ein DVB-T-Signal,
- Fig. 3: eine Empfangsvorrichtung mit Raumdiversity gemäß der Erfindung, und
- Fig. 4: eine alternative Empfangsvorrichtung mit Raumdiversity gemäß der Erfindung.

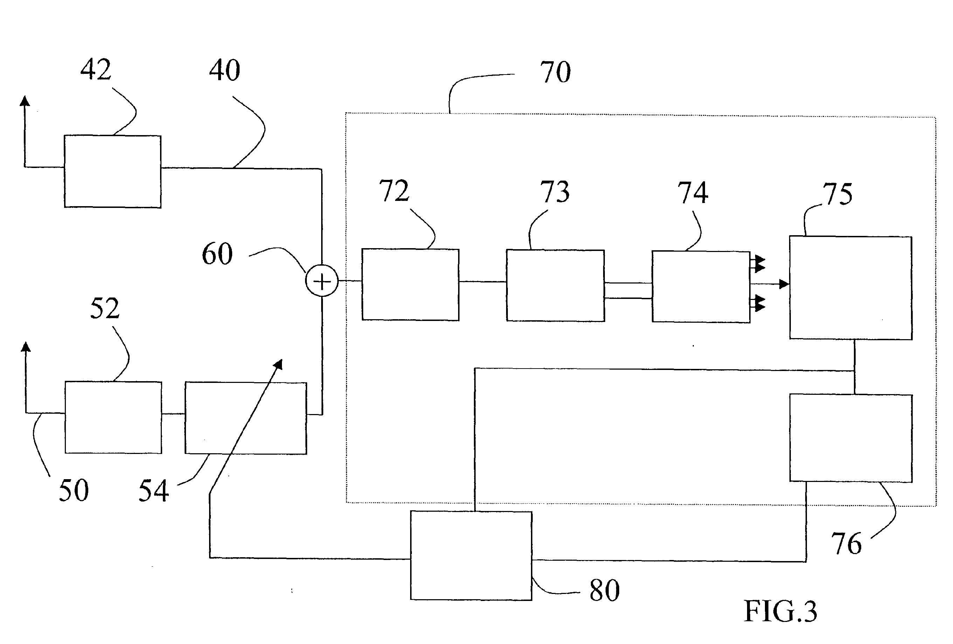

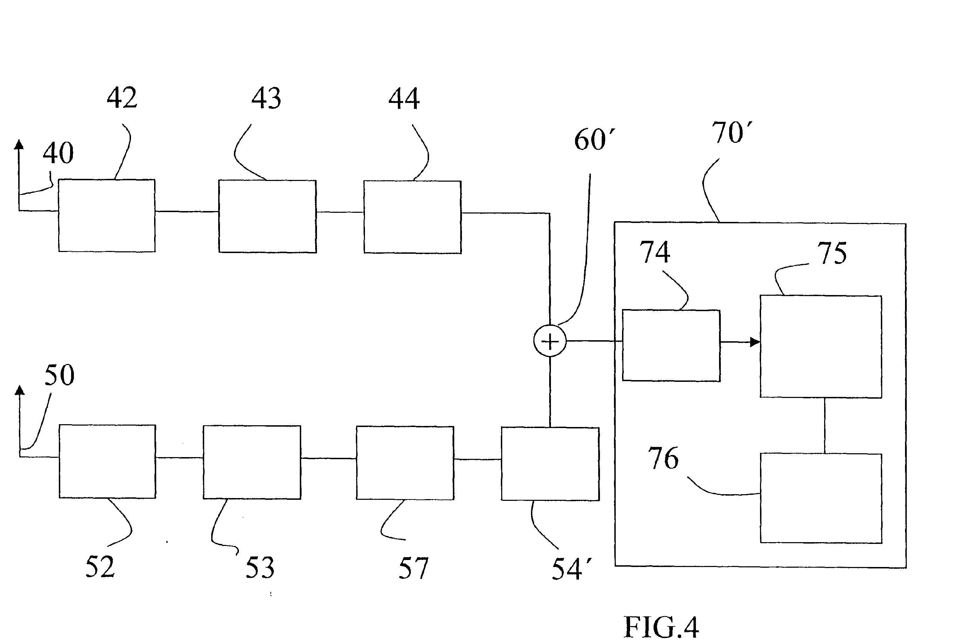

Die in den Fig. 3 und 4 dargestellten Diversity-Empfangsvorrichtungen unterscheiden sich von den in Fig. 1 und 2 dargestellten bekannten Empfängeranordnungen durch einen einfacheren Aufbau. Dies konnte dadurch erreicht werden, dass weder eine Selection-Combining- Methode noch eine Maximal-Ratio-Combining-Methode von der Diversity-Empfangsvorrichtung durchgeführt wird.

Wie Fig. 3 zeigt, weist die Diversity-Empfangseinrichtung einen ersten und einen zweiten Diversityzweig 40 und 50 auf. Jeder Diversityzweig 40 und 50 enthält eine Empfangsantenne 42 bzw. 52, an denen ein Mehrträgersignal, beispielsweise ein OFDM-Signal Signal empfangen werden kann. Die Empfangsantennen 42 und 52 weisen einen solchen räumlichen Abstand zueinander auf, dass die beiden empfangenen OFDM-Signale unkorreliert sind. Das von der Empfangsantenne 52 im zweiten Diversityzweig empfangene OFDM-Signal wird einem Verzögerer 54 mit adaptiv einstellbarere Verzögerungszeit zugeführt. Das Ausgangssignal der Empfangsantenne 42 des ersten Diversityzweiges 40 und das Ausgangssignal des Verzögerers 54 werden dann in einem Addierer 60 zu einem OFDM-Summensignal addiert, welches einem Mehrwegesignal entspricht. Bei dem Addierer kann es sich um einen geeigneten Leistungskoppler handeln. Hinsichtlich des OFDM-Summensignals sieht die Diversity-Empfangsvorrichtung somit einen Übertragungskanal mit zeit- und frequenzselektivem Schwundverhalten. Diese Maßnahme führt, wie nachfolgend noch erläutert, zu einer Empfangsqualität, die im wesentlichen der der aufwendiger aufgebauten Anordnungen nach Fig. 1 und 2 entspricht. Das auf diese Weise gebildete OFDM-Summensignal wird zur Verarbeitung an den Eingang eines Empfängers 70 angelegt. Dieser Empfänger kann ein konventioneller DVB-T-Empfänger sein, der üblicherweise nicht für einen Diversity-Empfang ausgelegt ist. Der Empfänger 70 enthält neben einem Hochfrequenz-Eingangsteil 72, einen Analog-Digital-Wandler 73 einen FFT-Prozessor 74. Das OFDM-Ausgangssignal des FFT-Prozessors 74 enthält beispielsweise 1705 nutzbare Unterträger (im 2K Modus) oder 6817 nutzbare Unterträger (im 8K Modus). In einer Kanalschätzeinrichtung 75 wird die Kanalimpulsantwort für den Funkkanal entsprechend der Bandbreite des OFDM-Ausgangssignals des FFT-Prozessore 74 geschätzt. Anschließend werden die Unterträger einem Demodulator, Decoder und Deinterleaver zugeführt, die beispielsweise in einer Einrichtung 76 implementiert sind.

Wesentliche Komponente der Diversity-Empfangsvorrichtung ist, wie bereits erwähnt, der Verzögerer 54, der eine Verzögerung T₀ zwischen die Empfangssignale in den beiden Diversityzweigen 40 und 50 einfügt, bevor diese zum OFDM-Summensignal addiert werden. Diese Verzögerung soll größer als die Abtastdauer des Analog-Digital-Wandlers 73 und kleiner als die Guardintervalldauer des benutzten OFDM-Signals sein. Ein Vorteil dieser Diversity-Empfangsvorrichtung ist, dass die Einführung der Verzögerung in Hochfrequenzlage, d.h. im Übertragungsband direkt erfolgen kann. Zur technischen Realisierung des Verzögerers 54 können SAW-Filter (SAW; Surface Acoustic Waves) vorteilhaft eingesetzt werden, da diese sich preisgünstig als Massenprodukte herstellen lassen und zudem geringe Abmessungen aufweisen.

Die Größe der Zeitverzögerung des Verzögerers 54 kann mittels einer Stellgröße adaptiv eingestellt werden. Diese Stellgröße wird von einem Stellelement 80 generiert. Als Eingangssignale des Stellelementes 80 können die beispielsweise in der Einrichtung 76 geschätzte aktuelle Bitfehlerrate und/oder die in der Kanalschätzeinrichtung 75 geschätzte Dauer der Kanalimpulsantwort verwendet werden. Das Stellelement 80 kann die Zeitverzögerung so einstellen, dass die Bitfehlerrate minimal wird. Für ein DVB-T-System kann die Bitfehlerrate z.B. aus dem Synchronisationswort des Transportstromes abgeleitet werden.

Eine digitale Ausführungsform der Diversity-Empfangsvorrichtung zeigt Fig. 4. Danach ist ein erster Diversityzweig 40 vorgesehen, der eine Empfangsantenne 42, ein Hochfrequenz-Eingangsteil 43 und einen Analog-Digitalwandler 44 aufweist, dem ein Zwischenspeicher (nicht dargestellt) zur Speicherung der digitalen Abtastwerte des empfangenen OFDM-Signals nachgeschaltet sein kann. In einem zweiten Diversityzweig 50 ist eine Empfangsantenne 52, ein Hochfrequenz-Eingangsteil 53, ein Analog-Digitalwandler 57, dem wiederum ein Zwischenspeicher nachgeschaltet sein kann, und ein digital arbeitender Verzögerer 54' angeordnet. Ähnlich der in Fig. 3 dargestellten Diversity-Empfangsvorrichtung kann die Verzögerungszeit des Verzögerers 54' adaptiv eingestellt werden. Ein entsprechendes Stellelement ist jedoch nicht dargestellt. Die Ausgangssignale des Analog-Digitalwandlers 44 und des Verzögerers 54' werden dann einem digital arbeitenden Addierer 60' zugeführt. Das resultierende digtale OFDM-Summensignal wird danach einem Empfänger 70' zugeführt, der einen FFT-Prozessor 74, eine Kanalschätzeinrichtung 75, einen Demodulator, einen Decoder und einen Deinterleaver aufweist. Demodulator, Decoder und Deinterleaver können wieder in einer Einrichtung 76 implementiert sein. Bei dieser Ausführungsform ist allerdings der schaltungstechnische Aufwand höher, da für jeden Diversityzweig ein Tuner und Analog-Digital-Wandler notwendig ist. Im Vergleich zur Anordnung nach Fig. 1 werden jedoch im wesentlichen die FFT-Prozessoren, und im Vergleich zur Anordnung nach Fig. 2 zusätzlich die Einheiten zur Kanalschätzung eingespart.

Nachfolgend wird die Wirkungsweise der in Fig. 3 und 4 dargestellten Diversity-Empfangsvorrichtung erläutert.

Bei einem DVB-T-System erfolgt sendeseitig eine innere Kanalkodierung - bestehend aus Faltungskodierung und Interleaving - im Frequenzbereich über die Unterträger eines zu übertragenden OFDM-Signals. Tiefe Schwundeinbrüche des Funkkanals in Zeitrichtung verursachen deshalb empfangsseitig Fehlerbündel am Eingang des Faltungsdekoders, da kein Interleaving in Zeitrichtung vorgesehen ist.

Als Beispiel werde nunmehr ein Funkkanal betrachtet, dessen Impulsantwort einen dominanten Pfad mit Rayleigh-Verteilung des Betrags der Amplitude aufweist. Dieser Kanal ist nicht frequenzselektiv, so dass die bei DVB-T-Systemen nur in Frequenzrichtung angewandte Kanalkodierung nicht wirksam ist. Ein solcher Funkkanal zeitigt tiefe Schwundeinbrüche in Zeitrichtung, die über alle Frequenzen gleichzeitig wirken; die Kanalkodierung des DVB-T-Systems ist somit wirkungslos.

Wird nun die Diversity-Empfangsvorrichtung nach Fig 3 oder 4 eingesetzt, bei der das im zweiten Diversityzweig 50 um T₀ zeitverzögerte OFDM-Signal zum nicht verzögerten OFDM-Signal des ersten Diversityzweiges 40 addiert wird, so sieht diese einen zeitvarianter Kanal, der sowohl zeit- als auch frequenzselektives Schwundverhalten aufweist. Allerdings sind die Schwundeinbrüche in Zeitrichtung weniger ausgeprägt. Demzufolge wirkt nunmehr die Kanalkodierung für den frequenz- und zeitselektiven Kanal. Mit anderen Worten wird durch die erfindungsgemäße Diversity-Empfangsvorrichtung die empfangene Nutzleistung des OFDM-Signals in der Zeit- und Frequenzebene derart verteilt, dass die Kanalkodierung bestehend aus Faltungskodierung und Interleaving in Frequenzrichtung wirksam wird. Die mit dieser Diversity-Empfangsvorrichtung erzielten Ergebnisse entsprechen im wesentlichen den Ergebnissen, die mit den bekannten, aber komplexeren Anordnungen erreicht werden können.

## Patentansprüche

1. Verfahren zum Empfangen eines Mehrträger-Signals über einen Übertragungskanal, insbesondere eines Funkkanals, mit folgenden Verfahrensschritten:
a) Empfangen eines Mehrträger-Signals an einer ersten (42) und wenigstens einer zweiten Empfangsantenne (52) ;
b) Verzögern des an der zweiten Empfangsantenne (52) empfangenen Mehrträger-Signals um eine vorbestimmbare Zeitdauer;
c) Addieren des verzögerten Mehrträger-Signals zum an der ersten Empfangsantenne (42) empfangenen Mehrträger-Signal zur Bildung eines Mehrträger-Summensignals;
d) Zuführen des Mehrträger-Summensignals einem Empfänger (70) zur Weiterverarbeitung des Mehrträger-Summensignals.

2. Verfahren nach Anspruch 1, **gekennzeichnet durch** folgende Schritte:
das Mehrträger-Summensignal wird zunächst einer Analog-Digital-Umsetzung und einer FFT-Transformation unterworfen;
für den Übertragungskanal wird entsprechend der Bandbreite des Mehrträger-Summensignals die Kanalimpulsantwort geschätzt;
jeder Unterträger wird demoduliert, decodiert und/oder einem Deinterleaver zugeführt.

3. Verfahren nach Anspruch 2, **dadurch gekennzeichnet, dass** die Dauer der Kanalimpulsantwort geschätzt und in Abhängigkeit von der geschätzen Dauer die Verzögerungszeit eingestellt wird.

4. Verfahren nach einem der Ansprüche 1 bis 3, **dadurch gekennzeichnet, dass** nach der Decodierung des Mehrträger-Summensignals die Bitfehlerrate ermittelt und in Abhängigkeit davon die Verzögerungszeit derart adaptiv eingestellt wird, dass die Bitfehlerrate minimiert wird.

5. Diversity-Empfangsvorrichtung zum Empfangen eines Mehrträgersignals mit
einem ersten Diversityzweig (40), der eine erste Empfangsantenne (42) zum Empfangen eines Mehrträger-Signals aufweist,
wenigstens einem zweiten Diversityzweig (50), der eine zweite Empfangsantenne (52) zum Empfangen des Mehrträgersignals und eine Verzögerungseinrichtung (54; 54') aufweist,
einem eingangsseitig mit den Diversityzweigen verbundenen Addierer (60; 60') zum Bilden eines Mehrträger-Summensignals, und
einem ausgangsseitig mit dem Addierer (60) verbundenen Empfänger (70; 70') zur Verarbeitung des Mehrträger-Summensignals.

6. Diversity-Empfangsvorrichtung nach Anspruch 5, **dadurch gekennzeichnet, dass** der Empfänger ein Hochfrequenz-Eingangsteil (72), einen Analog-Digitalwandler (73), einen FFT-Prozessor (74), eine Demodulations-, Decodiereinrichtung und/oder einen Deinterleaver (76) aufweist.

7. Diversity-Empfangsvorrichtung nach Anspruch 6, **gekennzeichnet durch** eine dem FFT-Prozessor (74) nachgeschaltete Kanalschätzeinrichtung (75) zum Schätzen der Kanalimpulsantwort.

8. Diversity-Empfangsvorrichtung nach Anspruch 5, **dadurch gekennzeichnet, dass**
der erste Diversityzweig (40) ferner ein Hochfrequenz-Eingangsteil (43) und einen Analog-Digitalwandler (44) aufweist, dass
der wenigstens eine zweite Diversityzweig (50) ferner ein Hochfrequenz-Eingangsteil (53) und einen Analog-Digitalwandler (57) aufweist, dass
die Verzögerungseinrichtung (54') und der Addierer (60') zum Verarbeiten digitaler Eingangssignale ausgebildet sind, und dass
der Empfänger (70') einen FFT-Prozessor (74), eine Demodulations-, Decodiereinrichtung und/oder einen Deinterleaver (76) aufweist.

9. Diversity-Empfangsvorrichtung nach Anspruch 8, **gekennzeichnet durch** eine dem FFT-Prozessor (74) nachgeschaltete Kanalschätzeinrichtung (75) zum Schätzen der Kanalimpulsantwort.

10. Diversity-Empfangsvorrichtung nach einem der Ansprüche 5 bis 9, **dadurch gekennzeichnet, dass** die Verzögerungseinrichtung (54; 54') adaptiv einstellbar ist, wobei ein Stellelement (80) in Abhängigkeit von der im Empfänger ermittelten Bitfehlerrate und/oder von der geschätzten Dauer der Kanalimpulsantwort eine entsprechende Stellgröße für die Verzögerungseinrichtung (54; 54') erzeugt.
